# NEUE EUROPÄISCHE PATENTSCHRIFT

(11) **EP 2 565 012 B2**
(45) Veröffentlichungstag und Bekanntmachung des Hinweises auf die Entscheidung über den Einspruch: **11.05.2022**
(45) Hinweis auf die Patenterteilung: 30.07.2014
(21) Anmeldenummer: 12182567.3
(22) Anmeldetag: 31.08.2012
(51) Int. Cl.: B29C 49/02, B29C 49/06, B29C 49/36, B29C 49/42, B29C 49/64, B29C 49/78

(54) **Anlage und Verfahren zum Herstellen von Kunststoffbehältnissen**
Apparatus and method for manufacturing plastic containers
Installation et procédé de fabrication de récipients en plastique

(30) Priorität: 01.09.2011 DE 102011053180
(43) Veröffentlichungstag der Anmeldung: 06.03.2013
(73) Patentinhaber: Krones AG, 93073 Neutraubling (DE)
(72) Erfinder: Forsthövel, Jochen, 93059 Regensburg (DE)
(74) Vertreter: Bittner, Bernhard

(56) Entgegenhaltungen:
- EP-A1- 0 813 949
- EP-A1- 2 258 534
- EP-A2- 0 856 392
- WO-A2-2009/127962
- CH-A5- 631 654
- DE-A1- 10 150 780
- JP-A- H0 957 825
- US-A- 4 313 720

## Beschreibung

Die vorliegende Erfindung bezieht sich auf eine Anlage zum Herstellen von Kunststoffbehältnissen. Derartige Anlagen sind aus dem Stand der Technik seit langem bekannt. Solche Anlagen sind beispielsweise in der DE 101 50780 A1, in der EP-A-0856 392 und in der DE 10 2008 008 528 A1 beschrieben. Dabei ist es beispielsweise üblich, dass Kunststoffvorformlinge zunächst in einem Ofen erwärmt und anschließend von einer Umformungseinrichtung, wie beispielsweise einer Blasmaschine, insbesondere einer Streckblasmaschine, zu Kunststoffbehältnissen umgeformt werden. Eine Vorrichtung nach dem Oberbegriff von Anspruch 1 ist aus der WO 2009/127962 A2 bekannt.

Üblicherweise erfolgt dabei die Herstellung der Kunststoffvorformlinge, im Folgenden auch als Preforms bezeichnet, zeitlich und räumlich getrennt von der Herstellung der Behältnisse, (beispielsweise durch einen Streckblasprozess). Im Stand der Technik sind jedoch auch Produktionsanlagen bekannt, bei denen eine Produktion der Kunststoffvorformlinge an einen Umformungsprozess, wie beispielsweise ein Streckblasprozess angekoppelt ist. Die folgende Erfindung ist insbesondere auf derartige Anlagen gerichtet, wobei jedoch darauf hingewiesen wird, dass die Erfindung auch bei anderen Anlagen, d. h. solchen Anlagen, bei denen die Vorformlinge nicht mit der gleichen Anlage hergestellt werden, anwendbar ist.

Üblicherweise werden die gefertigten Kunststoffvorformlinge mittels Förderbändern, auf denen die Kunststoffvorformlinge vorteilhaft in offener Schütte transportiert werden, gefördert. Diese Förderbänder können dabei auch eingehaust sein oder ggfs. auch belüftet sein.

Im Stand der Technik werden dabei diese Förderbänder so lang ausgelegt, dass bei einem stationären Betrieb die Kunststoffvorformlinge fast auf die Umgebungstemperatur abgekühlt werden. Auf diese Weise kann gewährleistet werden, dass bei Störungen auf der Blasmaschine oder der nachfolgenden Maschinen der Linie, die Kunststoffvorformlinge wieder mit der gleichen Temperatur in der Blasmaschine bzw. dem vorgeschalteten Ofen ankommen. Wäre die Temperatur höher, z. B. dadurch, dass die Förderbänder kurz sind und der Kunststoffvorformling durch die größere Verweilzeit bei einem Linienstopp mehr Kühlzeit und so eine geringere Temperatur hat. Dann würde die Blasmaschine Kunststoffbehältnisse mit schlechterer Qualität produzieren, solange, bis der Erwärmungsprozess von der Blasmaschine wieder auf die anderen Preformeingangstemperaturen eingeregelt worden ist. Dies führt jedoch zu einer höheren Ausschussrate.

Insbesondere bei einer derartigen verblockten Produktion wird üblicherweise eine Vorrichtung zum Herstellen der Kunststoffvorformlinge, wie beispielsweise eine Spritzgießmaschine in der Regel mit einer gewissen Überleistung ausgelegt. Die überschüssigen Kunststoffvorformlinge werden vorteilhaft über eine Weiche direkt nach der Spritzgießanlage ausgeschleust. Auch bei Störungen und Stopps der Linie nach der Herstellungseinrichtung, wie beispielsweise einer Spritzgießmaschine, produziert diese die Kunststoffvorformlinge weiter und diese werden direkt nach der Spritzgießmaschine in einen Behälter gefahren. Die so auf Vorrat produzierten Kunststoffvorformlinge können bei Wartung der Spritzgießmaschine wieder in die Linie gefahren werden.

Der vorliegenden Erfindung liegt die Aufgabe zugrunde, eine derartige Behandlungsanlage zur Verfügung zu stellen, welche die oben erwähnten Unregelmäßigkeiten, beispielsweise beim Ausfall einzelner Maschinen vermeidet. Diese Aufgaben werden durch die Gegenstände der unabhängigen Ansprüche erreicht. Vorteilhafte Ausführungsformen und Weiterbildungen sind Gegenstand der Unteransprüche.

Eine erfindungsgemäße Anlage zum Herstellen von Kunststoffbehältnissen weist eine erste Behandlungseinheit auf, welche Kunststoffvorformlinge mit einer über eine Umgebungstemperatur liegenden Temperatur ausgibt. Weiterhin weist die Anlage eine Transporteinrichtung auf, welche die Kunststoffvorformlinge von der ersten Behandlungseinheit abtransportiert sowie eine in der Transportrichtung der Kunststoffvorformlinge nach der ersten Behandlungseinheit angeordnete Umformungsanordnung, welche die Kunststoffvorformlinge zu den Kunststoffbehältnissen umformt. Die Transporteinrichtung weist dabei einen Zuführbereich auf, in dem die Kunststoffvorformlinge der Transporteinrichtung zugeführt werden. Diese Umformungsanordnung weist dabei eine Erwärmungseinrichtung auf, welche die Kunststoffvorformlinge erwärmt, sowie eine in der Transportrichtung der Kunststoffvorformlinge angeordnete Blasformmaschine, welche die erwärmten Kunststoffvorformlinge durch Beaufschlagung mit einem fließfähigen Medium zu den Kunststoffbehältnissen expandiert.

Dabei weist die Blasformmaschine eine Vielzahl von Beaufschlagungseinrichtungen auf, welche die Kunststoffvorformlinge mit einem fließfähigen Medium und insbesondere mit einem gasförmigen Medium beaufschlagen sowie eine Transporteinrichtung, welche die Kunststoffvorformlinge - insbesondere während deren Expansion - transportiert. Weiterhin weist die Anlage eine zwischen der ersten Behandlungseinheit und der Umformungseinheit angeordnete Ausschleuseinrichtung zum Ausschleusen der Kunststoffvorformlinge auf.

Erfindungsgemäß weist die Anlage eine Speichereinrichtung zum zumindest vorübergehenden Aufbewahren der von der Ausschleuseinrichtung ausgeschleusten Kunststoffvorformlinge auf und die Ausschleuseinrichtung ist in der Transportrichtung der Kunststoffvorformlinge nach dem Zuführbereich der Transporteinrichtung angeordnet, bevorzugt derart, dass die Kunststoffvorformlinge erst nach dem Eintritt in die Transporteinrichtung ausgeschleust werden.

Unter der Speichereinrichtung wird eine Einrichtung verstanden, welche zur Aufnahme einer Vielzahl von Kunststoffvorformlingen geeignet ist. Erfindungsgemäß ist die Speichereinrichtung zur Aufnahme von wenigstens 50, bevorzugt von wenigstens 100, bevorzugt von wenigstens 200 und besonders bevorzugt von wenigstens 500 Kunststoffvorformlingen geeignet. Die Beaufschlagungseinrichtung weist vorteilhaft eine Blasdüse auf, welche an eine Mündung der Kunststoffvorformlinge anlegbar ist, um diese mit dem fließfähigen Medium und insbesondere mit Luft zu beaufschlagen. Vorteilhaft ist die Beaufschlagungseinrichtung in einer Längsrichtung der Kunststoffvorformlinge gegenüber den Kunststoffvorformlingen bewegbar.

Es wird eine Anlage vorgeschlagen, bei der zunächst bereits vortemperierte Kunststoffvorformlinge zur Verfügung gestellt werden, beispielsweise aus einer Herstellungseinheit und anschließend im laufenden Betrieb zumindest zeitweise die Kunststoffe oder ein Teil derselben ausgeschleust und an die besagte Speichereinrichtung übergeben wird.

Bei einer bevorzugten Ausführungsform ist die Ausschleuseinrichtung entlang des Transportpfades der Kunststoffvorformlinge näher an der Erwärmungseinrichtung als an der Behandlungseinheit angeordnet. Bei der Erwärmungseinrichtung kann es sich beispielsweise um einen Infrarot oder auch Mikrowellenofen handeln, durch den die Kunststoffvorformlinge transportiert werden, wobei während dieses Transports der Kunststoffvorformlinge bevorzugt die Erwärmung erfolgt.

Unter einer Anordnung näher an der Erwärmungseinrichtung wird verstanden, dass die Zeitspanne, welche für den Transport der Kunststoffvorformlinge von der Ausschleuseinrichtung zu der Erwärmungseinrichtung benötigt wird, in einem normalen Arbeitsbetrieb kürzer ist als die Zeitspanne, welche für den Transport der Kunststoffvorformlinge von der ersten Behandlungseinheit zu der Ausschleuseeinrichtung benötigt wird. Vorteilhaft beträgt das Verhältnis zwischen der Zeitspanne, welche für den Transport der Kunststoffvorformlinge von der Ausschleuseinrichtung zu der Erwärmungseinrichtung benötigt wird und der Zeitspanne, welche für den Transport der Kunststoffvorformlinge von der ersten Behandlungseinheit zu der Ausschleuseeinrichtung benötigt wird, weniger als 2/3, bevorzugt weniger als 1/2, bevorzugt weniger als 1/3, bevorzugt weniger als 1/4, bevorzugt weniger als 1/5 besonders bevorzugt weniger als 1/7 und besonders bevorzugt weniger als 1/10.

Bei einer weiteren vorteilhaften Ausführungsform ist die Ausschleuseinrichtung in der Transportrichtung der Kunststoffvorformlinge unmittelbar vor der Erwärmungseinrichtung angeordnet. Es wird daher vorgeschlagen, dass die Ausschleusung insbesondere der Überleistung einer ersten Behandlungseinheit vorzugsweise sowohl im stationären Betrieb, als auch im Falle von Störungen und Stopps in der nachfolgenden Produktionslinie direkt an der Blasmaschine erfolgt. Vorteilhaft erfolgt diese Ausschleusung möglichst direkt vor der Erwärmungseinrichtung, um die Anzahl der Kunststoffvorformlinge zwischen der Erwärmungseinrichtung und der Ausschleusung möglichst gering zu halten.

Bei einer bevorzugten Ausführungsform ist die Transporteinrichtung auf welcher die Kunststoffvorformlinge vor der ersten Behandlungseinheit zu der Umformungsanordnung transportiert werden, derart eingestellt, dass die Anzahl der ausgeworfenen bzw. ausgeschleusten Kunststoffvorformlinge kleiner ist als eine Überleistung der ersten Behandlungseinheit. Bei dieser Transporteinrichtung handelt es sich vorteilhaft um einen Vorformlingförderer bzw. einen Rollensortierer. Von dieser Transporteinrichtung bzw. von dem Rollensortierer ausgeworfene Kunststoffvorformlinge werden vorteilhaft nicht in üblichen Linien wieder vor dem Rollensortierer eingeschleust, sondern werden in der besagten Speichereinrichtung, bei der es sich beispielsweise um Lagerbehälter handeln kann, gefahren. Dies bringt den Vorteil mit sich, dass alle Kunststoffvorformlinge die gleiche Temperaturhistorie aufweisen.

Bei einer weiteren vorteilhaften Ausführungsform ist die erste Behandlungseinheit eine Herstellungseinrichtung zum Herstellen von Kunststoffvorformlingen. Vorteilhaft handelt es sich hierbei um eine Spritzgießmaschine, welche die Kunststoffvorformlinge herstellt. Es wäre jedoch auch denkbar, dass es sich bei der ersten Behandlungseinheit um einen Vorerwärmofen, eine sogenannte Hotbox, handelt, durch den die Kunststoffvorformlinge gefahren werden, um so auf eine einheitliche, insbesondere über der Umgebungstemperatur liegende Temperatur gebracht zu werden. Diese Anordnung ist insbesondere dann vorteilhaft, wenn die Kunststoffvorformlinge beispielsweise im Winter von außerhalb einer Lagerhalle geholt werden.

Bei der vorgeschlagenen Vorgehensweise läuft der Transport der Kunststoffvorformlinge von der ersten Behandlungseinheit bzw. Spritzgießmaschine zu der Umformungsanordnung permanent und auf diese Weise ist auch die Verweilzeit der Kunststoffvorformlinge zwischen der ersten Behandlungseinheit und der Umformungsanordnung immer im Wesentlichen und bevorzugt genau gleich lang. Unabhängig von der Länge der besagten Förderstrecke zwischen der ersten Behandlungseinheit und der Umformungsanordnung werden direkt an der Umformungsanordnung die Kunststoffvorformlinge immer die gleiche Temperatur aufweisen.

Auf diese Weise ist es möglich, die Förderstrecke beliebig zu verkürzen, ohne dass die Umformungsanordnung Probleme mit der Regelung der Temperatur der Erwärmungseinrichtung bekommt. Auf diese Weise kann eine Platzersparnis bei gleichzeitig geringerer Ausschussrate erreicht werden.

Die genannte kürzere Förderstrecke bietet den Vorteil, dass eine Eingangstemperatur der Kunststoffvorformlinge bei Zuführung zu der Blasmaschine höher ist, also weniger Energie zum Heizen benötigt wird.

Bei einer weiteren vorteilhaften Ausführungsform weist die Anlage eine erste Temperaturerfassungseinrichtung zum Erfassen einer Temperatur der Kunststoffvorformlinge auf. Vorteilhaft ist auch eine Steuerungseinrichtung vorgesehen, welche oben erwähnte Erwärmungseinrichtung in Abhängigkeit von einem Ausgangssignal dieser Temperaturerfassungseinrichtung steuert. Vorteilhaft ist die Temperaturerfassungseinrichtung so gestaltet, dass sie die Temperatur der Kunststoffvorformlinge berührungslos erfasst. So kann beispielsweise die Blasmaschine einen Sensor für die Vorformlingstemperatur, insbesondere am Eingang der Blasmaschine aufweisen.

Daneben kann die Vorrichtung auch einen Sensor zur Erfassung einer Umgebungstemperatur aufweisen. Auf diese Weise wird die Möglichkeit eröffnet, dass die Umformungsanordnung auf unterschiedliche Preformeingangstemperaturen reagieren kann, so beispielsweise selbstständig zwischen verschiedenen Programmen, wie beispielsweise einem Inline-Betrieb und einem Offline-Betrieb wählen kann. Daneben besteht auch die Möglichkeit, dass Kunststoffvorformlinge, die nicht einer bestimmten Temperaturspezifikation der Umformungseinrichtung entsprechen, also beispielsweise kälter sind als die üblicherweise ankommenden Kunststoffvorformlinge, ausgeschleust werden. Dies wäre beispielsweise der Fall bei Störungen in der Verbindungsstrecke zwischen der Kunststoffvorformlingsherstellung und der Blasmaschine oder bei einzelnen Kunststoffvorformlingen, die aufgrund eines Liegenbleibens in der Zuführung eine geringere Temperatur aufweisen.

Bei einer weiteren vorteilhaften Ausführungsform werden die erste Behandlungseinheit und die Umformungsanordnung mit aufeinander abgestimmten Produktionsraten betrieben. So wäre es möglich, dass die beiden Vorrichtungen miteinander geblockt sind. Die Erfindung ist daher insbesondere bei solchen Anlagen anwendbar, bei denen die Produktion der Kunststoffvorformlinge mit der Produktion der Behältnisse, d. h. insbesondere der Umformung der Kunststoffvorformlinge zu Kunststoffbehältnissen gekoppelt bzw. verblockt ist.

Hierunter wird jedoch auch verstanden, dass beispielsweise die erste Behandlungseinheit permanent mit einer höheren Ausgangsleistung betrieben wird als die Umformungsanordnung.

Die vorliegende Erfindung ist weiterhin auf ein Verfahren zum Herstellen von Kunststoffbehältnissen gerichtet. Dabei werden in einem ersten Verfahrensschritt Kunststoffvorformlinge mit einer vorgegebenen Temperatur zur Verfügung gestellt, wobei diese Temperatur bevorzugt oberhalb einer Umgebungstemperatur liegt. In einem Verfahrensschritt werden die Kunststoffvorformlinge von einer Transporteinrichtung zu einer Umformungsanordnung transportiert und in einem weiteren Schritt werden die Kunststoffvorformlinge mittels der Umformungsanordnung zu Kunststoffbehältnissen umgeformt, wobei hierzu die Kunststoffvorformlinge zunächst in einer Erwärmungseinrichtung erwärmt und anschließend die so erwärmten Kunststoffvorformlinge durch Beaufschlagung mit einem fließfähigen Medium zu den Kunststoffbehältnissen expandiert werden.

Erfindungsgemäß werden während eines Arbeitsbetriebs wenigstens zeitweise die Kunststoffvorformlinge nach Erreichen der Transporteinrichtung und vor Erreichen der Umformungsanordnung ausgeschleust und bevorzugt einer Speichereinrichtung zu deren Aufbewahrung zugeführt. Es wird daher auch verfahrensseitig vorgeschlagen, die Kunststoffvorformlinge im Arbeitsbetrieb zumindest zeitweise auszuschleusen, um auf diese Weise eine gleichmäßige Temperierung der Kunststoffvorformlinge zu erreichen.

Erfindungsgemäß gibt wenigstens zeitweise die erste Behandlungseinheit mehr Kunststoffvorformlinge aus, als die Umformungsanordnung Kunststoffvorformlinge zu den Kunststoffbehältnissen umformt. Auf diese Weise wird die Anlage zur Herstellung der Kunststoffvorformlinge wenigstens zeitweise gegenüber der Umformungsanordnung mit einer bestimmten Überproduktion betrieben, um auf diese Weise den Speicher in den die Kunststoffvorformlinge ausgeschleust werden, aufzufüllen. Vorteilhaft werden die Kunststoffvorformlinge der Umformungsanordnung aus der besagten Speichereinrichtung zugeführt.

Bei einem weiteren vorteilhaften Verfahren werden die Kunststoffvorformlinge zu vorgegebenen Zeiträumen in der Speichereinrichtung aufbewahrt und vorteilhaft auch transportiert. Vorteilhaft erlaubt daher die Speichereinrichtung auch einen Transport der Kunststoffvorformlinge. Vorteilhaft erlaubt die Speichereinrichtung einen vereinzelten Transport der Kunststoffvorformlinge. Bevorzugt werden der Erwärmungseinrichtung alle Kunststoffvorformlinge aus der Speichereinrichtung zugeführt, oder mit anderen Worten durchlaufen bevorzugt alle Kunststoffvorformlinge auch die Speichereinrichtung.

Bei einem bevorzugten Verfahren unterscheiden sich die Zeiträume während der die einzelnen Kunststoffvorformlinge sich in der Speichereinrichtung befinden.

Damit eignet sich die vorliegende Erfindung und auch das vorliegende Verfahren bei solchen Anlagen, bei der die Kunststoffvorformlinge mit einer Temperatur zugeführt werden, die über der Umgebungstemperatur liegt, beispielsweise in dem Fall, dass die Kunststoffvorformlinge hergestellt werden oder aus einer Konditionierungsvorrichtung stammen. Vorzugsweise liegt die Temperatur der Kunststoffvorformlinge wenigstens 5°, bevorzugt wenigstens 10°, bevorzugt wenigstens 15° und besonders bevorzugt wenigstens 20° über der Umgebungstemperatur.

Weitere Vorteile und Ausführungsformen ergeben sich aus den beigefügten Zeichnungen. Darin zeigen:
- Fig. 1: eine Anlage zum Herstellen von Kunststoffbehältnissen nach dem Stand der Technik; und
- Fig. 2: eine erfindungsgemäße Anlage zum Herstellen von Kunststoffbehältnissen.

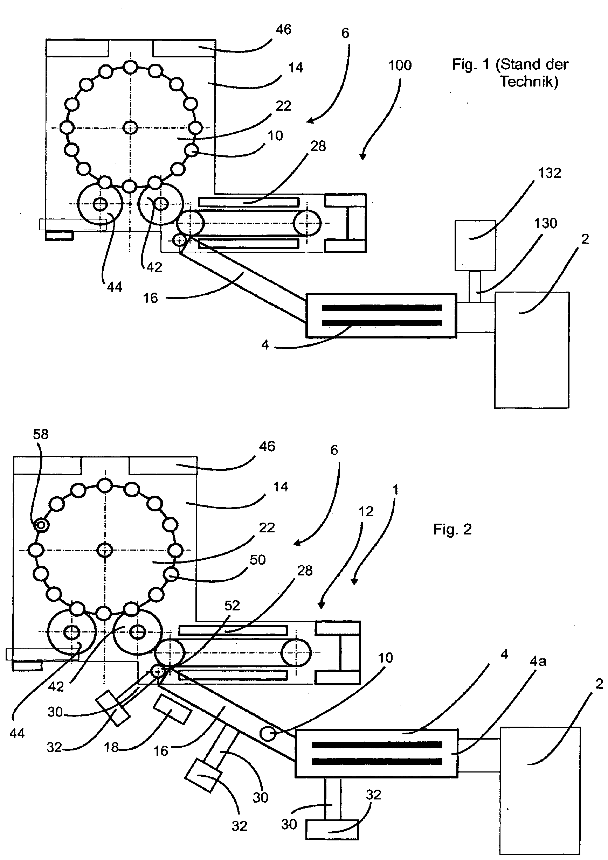

Fig. 1 zeigt eine Anlage 100 nach dem Stand der Technik. Diese Anlage 100 weist eine erste Behandlungseinheit 2 auf, bei der es sich beispielsweise um eine Spritzgußmaschine zum Herstellen von Kunststoffvorformlingen handeln kann. Das Bezugszeichen 130 bezieht sich auf eine Ausschleusung, welche aus dieser Spritzgußmaschine 2 ausgegebene Vorformlinge in ein Lager 132 ausführt. Damit ist hier dieses Lager 132 direkt an der Spritzgußmaschine 2 angeordnet. Der Nachteil dieser Ausgestaltung liegt, wie bereits Eingangs erwähnt, darin, dass nicht flexibel auch vorübergehende Störungen in der ersten Behandlungseinheit oder auch der zweiten Behandlungseinheit 6 bzw. der Umformungsanordnung 6 reagiert werden kann.

Fig. 2 zeigt eine schematische Darstellung einer erfindungsgemäßen Anlage 1 zum Herstellen von Kunststoffbehältnissen. Auch hier ist eine erste Behandlungseinheit 2 vorgesehen, welche Kunststoffvorformlinge ausgibt, jedoch schließt sich hier an diese erste Behandlungseinheit unmittelbar eine erste Transporteinrichtung 4 zum Transportierten der Kunststoffvorformlinge an, wobei es sich hier bei dieser ersten Transporteinrichtung 4 um einen Rollensortierer handelt, der die ausgegebenen Kunststoffvorformlinge mittels zwei parallelen und sich drehenden Rollen sortiert. An diese Transporteinrichtung 4 schließt sich eine zweite Transporteinrichtung 16 an, welche ebenfalls die Kunststoffvorformlinge 10 transportiert.

Genauer handelt es sich hier bei der Transporteinrichtung 16 um eine Gleitschiene, entlang derer die Kunststoffvorformlinge gleiten. Das Bezugszeichen 52 bezieht sich auf ein sogenanntes Eintaktrad, welches die Kunststoffvorformlinge vereinzelt und vereinzelt der Erwärmungseinrichtung 12 zuführt. Die Kunststoffvorformlinge werden durch die Erwärmungseinrichtung 12, bei der es sich beispielsweise um einen Infrarotofen, aber auch einen Mikrowellen- bzw. Laserofen handeln kann, hindurchtransportiert, und dort mit Heizelementen 28 erwärmt. Das Bezugszeichen 4a bezieht sich auf einen Zuführbereich, in dem die Kunststoffvorformlinge 10 der ersten Transporteinrichtung 4 zugeführt werden. Vorteilhaft werden die Kunststoffvorformlinge in der ersten Transporteinrichtung nicht vereinzelt geführt. Vorteilhaft transportiert auch die zweite Transporteinrichtung die Kunststoffvorformlinge nicht vereinzelt, sondern vorteilhaft zumindest teilweise aneinander anstoßend.

Anschließend werden die Kunststoffvorformlinge über einen Zuführstern 42 einem Blasrad 14 zugeführt. Dieses Blasrad 14 bildet gemeinsam mit der Erwärmungseinrichtung 12 die in ihrer Gesamtheit mit 6 bezeichnete Umformungsanordnung zum Umformen von Kunststoffvorformlingen zu Kunststoffbehältnissen. Das Blasrad 14 weist dabei eine Vielzahl von Blasstationen 50, auf die an einem drehbaren Träger 22 angeordnet sind. Das Bezugszeichen 46 bezieht sich auf eine Steuerungseinrichtung, welche zum Steuern der Blasmaschine 14 dient.

Über ein Ausführrad 44 werden die umgeformten Kunststoffbehältnisse von der Blasmaschine 14 abgeführt.

Jede einzelne Blasstation 50 weist dabei auch eine Beaufschlagungseinrichtung, wie beispielsweise eine bewegliche Blasdüse auf, welche die Kunststoffvorformlinge mit Luft beaufschlagt, um diese zu expandieren. Eine dieser Beaufschlagungseinrichtungen ist dabei schematisch dargestellt und mit dem Bezugszeichen 58 versehen. Vorteilhaft handelt es sich bei der Blasmaschine 14 um eine Streckblasmaschine, welche daher auch eine Vielzahl von Reckstangen aufweist, welche die Kunststoffbehältnisse 10 während deren Expansion auch in ihrer Längsrichtung dehnen.

Das Bezugszeichen 30 bezieht sich auf eine Ausschleuseinrichtung, welche die Kunststoffvorformlinge aus der Zuführung ausschleust und das Bezugszeichen 32 eine Speichereinrichtung zum zumindest vorübergehenden Aufbewahren der Kunststoffvorformlinge. Dabei ist es möglich, dass innerhalb der Speichereinrichtung 32 ebenfalls eine Transporteinrichtung vorgesehen ist, mittels derer die Kunststoffvorformlinge transportiert werden können. Auch ist es möglich, dass die Ausschleuseinrichtung 30 und/oder die Speichereinrichtung Erwärmungseinrichtungen aufweisen, um die Kunststoffvorformlinge auf eine bestimmte Temperatur zu erwärmen, welche jedoch insbesondere unterhalb derjenigen Temperatur liegt, auf welche die Kunststoffvorformlinge in der Erwärmungseinrichtung 12 erwärmt werden.

In Fig. 2 sind drei mögliche Positionen zum Anordnen der Ausschleuseinrichtung 30 sowie der Speichereinrichtung 32 gezeigt. Bevorzugt erfolgt die Ausschleusung direkt vor der Erwärmungsvorrichtung, beispielsweise im Bereich des Eintaktrades 52. Es wäre jedoch auch möglich, die Ausschleusung im Bereich der zweiten Transporteinrichtung 16 vorzunehmen oder auch in einem Bereich und insbesondere einem Endbereich der ersten Transporteinrichtung 4. Die Ausschleusung der Kunststoffvorformlinge erfolgt jedoch erst nach dem Zuführbereich 4a. Die Ausschleuseinrichtung kann dabei derart gestaltet sein, dass sie die Ausschleusung einzelner Kunststoffvorformlinge oder auch von Gruppen von aufeinanderfolgenden Kunststoffvorformlingen erlaubt. Die Ausschleusung kann jedoch auch so gestaltet sein, dass sämtliche Kunststoffvorformlinge zunächst ausgeschleust werden und dann ausgehend von der Speichereinrichtung wieder weiter zu der Erwärmungseinrichtung 12 transportiert werden.

Vorteilhaft sind jedoch die Ausschleuseinrichtung 30 und die Speichereinrichtung 32 derart aufgebaut, dass sämtliche Vorformlinge durch die Speichereinrichtung hindurch transportiert werden. Auf diese Weise ist es möglich, dass im normalen Betrieb die erste Behandlungseinheit 2 und die Umformungsanordnung 6 zwar miteinander verblockt sind, gleichwohl die erste Behandlungseinheit 2 jedoch mit einer höheren Ausstoßgeschwindigkeit betrieben wird, als die Umformungsanordnung. Diese im normalen Arbeitsbetrieb anfallende Überproduktion wird durch die Ausschleuseinrichtung 30 und die Speichereinrichtung 32 aufgefangen. Damit ist die Speichereinrichtung in der Lage, eine variable Anzahl von Kunststoffvorformlingen aufzunehmen. Im Falle eines Fehlers der ersten Behandlungseinheit kann dieser Überschuss in der Speichereinrichtung abgebaut werden und Kunststoffvorformlinge mit einer genau definierten Ausgangstemperatur können jeweils der Umformungsanordnung 6 zugeführt werden.

Das Bezugszeichen 18 bezieht sich auf eine Temperaturerfassungseinrichtung, welche die Temperatur der Kunststoffvorformlinge erfasst. Ein Ausgangssignal dieser Temperaturerfassungseinrichtung 18 kann an die Steuerungseinrichtung 46 der Umformungsanordnung oder auch eine entsprechende Steuerungseinrichtung der Erwärmungseinrichtung 12 ausgegeben werden, damit diese entsprechend die Erwärmung der Kunststoffvorformlinge anpasst.

### Bezugszeichenliste

- 1: Anlage
- 2: erste Behandlungseinheit, Spritzgussmaschine
- 4: erste Transporteinrichtung
- 4a: Zuführbereich
- 6: zweite Behandlungseinheit, Umformungsanordnung
- 10: Kunststoffvorformlinge
- 12: Erwärmungseinrichtung
- 14: Blasrad
- 16: zweite Transporteinrichtung
- 18: Temperaturerfassungseinrichtung
- 20: Kunststoffbehältnisse
- 22: Träger
- 28: Heizelemente
- 30: Ausschleuseinrichtung
- 32: Speichereinrichtung
- 42: Zuführstern
- 44: Ausführrad
- 46: Steuerungseinrichtung
- 50: Blasstation
- 52: Eintaktrad
- 58: Beaufschlagungseinrichtung
- 100: Anlage (StdT)
- 130: Ausschleusung
- 132: Lagereinrichtung
- P: Transportrichtung

## Patentansprüche

1. Anlage (1) zum Herstellen von Kunststoffbehältnissen mit einer ersten Behandlungseinheit (2), welche Kunststoffvorformlinge (10) mit einer über einer Umgebungstemperatur liegenden Temperatur ausgibt, mit einer Transporteinrichtung (4, 16), welche die Kunststoffvorformlinge (10) von der ersten Behandlungseinheit (2) abtransportiert, wobei die Transporteinrichtung (4, 16) einen Zuführbereich (4a) aufweist, in dem die Kunststoffvorformlinge (10) der Transporteinrichtung (4, 16) zugeführt werden, mit einer in der Transportrichtung der Kunststoffvorformlinge (10) nach der ersten Behandlungseinheit (2) angeordneten Umformungsanordnung (6), welche die Kunststoffvorformlinge (10) zu den Kunststoffbehältnissen (20) umformt, wobei die Umformungsanordnung (6) eine Erwärmungseinrichtung (12) aufweist, welche die Kunststoffvorformlinge (10) erwärmt sowie ein in der Transportrichtung (P) der Kunststoffvorformlinge (10) angeordnetes Blasrad (14), welches die erwärmten Kunststoffvorformlinge (10) durch Beaufschlagung mit einem fließfähigen Medium zu den Kunststoffbehältnissen (20) expandiert, wobei das Blasrad (14) eine Vielzahl von Beaufschlagungseinrichtungen (58) aufweist, welche die Kunststoffvorformlinge (10) mit dem fließfähigen Medium beaufschlagen sowie eine Transporteinrichtung (22), welche die Kunststoffvorformlinge transportiert, und die Anlage (1) eine zwischen der ersten Behandlungseinheit (2) und der Umformungsanordnung angeordnete Ausschleuseinrichtung (30) zum Ausschleusen der Kunststoffvorformlinge aufweist,
wobei
die Anlage eine Speichereinrichtung (32) zum zumindest vorübergehenden Aufbewahren der von der Ausschleuseinrichtung (30) ausgeschleusten Kunststoffvorformlinge (10) aufweist und die Ausschleuseinrichtung (30) in der Transportrichtung der Kunststoffvorformlinge (10) nach dem Zuführbereich (4a) angeordnet ist,
wobei die Speichereinrichtung in der Lage ist, eine variable Anzahl von Kunststoffvorformlingen aufzunehmen,
**dadurch gekennzeichnet, dass**
die Speichereinrichtung (32) zur Aufnahme von wenigstens 50 Kunststoffvorformlingen geeignet ist, und mittels der ersten Behandlungseinheit (2) wenigstens zeitweise mehr Kunststoffvorformlinge (10) ausgebbar sind als die Umformungsanordnung (6) Kunststoffvorformlinge (10) zu den Kunststoffbehältnissen (20) umformt, wobei auf diese Weise die Anlage zur Herstellung der Kunststoffvorformlinge, welche die erste Behandlungseinheit ist, wenigstens zeitweise gegenüber der Umformungsanordnung mit einer bestimmten Überproduktion betreibbar ist, um auf diese Weise den Speicher, in den die Kunststoffvorformlinge ausgeschleust werden, aufzufüllen.

2. Anlage (1) nach Anspruch 1,
**dadurch gekennzeichnet, dass**
die Ausschleuseinrichtung (30) entlang des Transportpfades der Kunststoffvorformlinge (10) näher an der Erwärmungseinrichtung (12) als an der ersten Behandlungseinheit (2) angeordnet ist.

3. Anlage (1) nach Anspruch 2,
**dadurch gekennzeichnet, dass**
die Ausschleuseintichtung (2) in der Transportrichtung der Kunststoffvorformlinge (10) unmittelbar vor der Erwärmungseinrichtung (12) angeordnet ist.

4. Anlage (1) nach wenigstens einem der vorangegangenen Ansprüche,
**dadurch gekennzeichnet, dass**
die erste Behandlungseinheit (2) eine Herstellungseinrichtung zum Herstellen der Kunststoffvorformlinge (10) ist.

5. Anlage (1) nach wenigstens einem der vorangegangenen Ansprüche,
**dadurch gekennzeichnet, dass**
die Anlage einer erste Temperaturerfassungseinrichtung (18) zum Erfassen einer Temperatur der Kunststoffvorformlinge (10) aufweist.

6. Anlage (1) nach wenigstens einem der vorangegangenen Ansprüche,
**dadurch gekennzeichnet, dass**
die erste Behandlungseinheit (2) und die Umformungsanordnung (6) mit aufeinander abgestimmten Produktionsraten betrieben werden.

7. Verfahren zum Herstellen von Kunststoffbehältnissen mittels einer Vorrichtung nach Anspruch 1 mit den Schritten:
- Zur Verfügungsstellen von Kunststoffvorformlingen (10) mit einer vorgegebenen Temperatur, welche oberhalb einer Umgebungstemperatur ist
- Transportieren der Kunststoffvorformlinge (10) zu der Umformungsanordnung (6) mittels der Transporteinrichtung (4, 16);
- Umformen der Kunststoffvorformlinge (10) zu Kunststoffbehältnissen (20) mittels der Umformungsanordnung (6), wobei hierzu die Kunststoffvorformlinge (10) zunächst in der Erwärmungseinrichtung (12) erwärmt und anschließend die so erwärmten Kunststoffvorformlinge (10) durch Beaufschlagung mit dem fließfähigen Medium zu den Kunststoffbehältnissen (20) expandiert werden,
wobei
während eines Arbeitsbetriebs wenigstens zeitweise die Kunststoffvorformlinge (10) nach Erreichen der Transporteinrichtung (4, 16) und vor Erreichen der Umformungsanordnung (6) ausgeschleust und der Speichereinrichtung (32) zu deren Aufbewahrung zugeführt werden, wobei
mittels der ersten Behandlungseinheit (2) wenigstens zeitweise mehr Kunststoffvorformlinge (10) ausgegeben werden als die Umformungsanordnung (6) Kunststoffvorformlinge (10) zu den Kunststoffbehältnissen (20) umformt, wobei auf diese Weise die Anlage zur Herstellung der Kunststoffvorformlinge, welche die erste Behandlungseinheit (2) ist, wenigstens zeitweise gegenüber der Umformungsanordnung mit einer bestimmten Überproduktion betrieben wird, um auf diese Weise den Speicher, in den die Kunststoffvorformlinge ausgeschleust werden, aufzufüllen.

8. Verfahren nach Anspruch 7,
**dadurch gekennzeichnet, dass**
die Kunststoffvorformlinge (10) für vorgegebene Zeiträume in der Speichereinrichtung (32) aufbewahrt und bevorzugt transportiert werden.

9. Verfahren nach Anspruch 8,
**dadurch gekennzeichnet, dass**
sich die Zeiträume, während derer sich die Kunststoffvorformlinge (10) in der Speichereinrichtung (32) befinden, für die einzelnen Kunststoffvorformlinge (10) unterscheiden.

## Claims

1. Plant (1) for producing plastics material containers, said plant having a first processing unit (2), which outputs plastics material preforms (10) having a temperature above an ambient temperature, having a transport means (4, 16), which transports the plastics material preforms (10) away from the first processing unit (2), the transport means (4, 16) having a feed region (4a), in which the plastics material preforms (10) are fed to the transport means (4, 16), having a forming arrangement (6), which is arranged after the first processing unit (2) in the direction of transport of the plastics material preforms (10) and forms the plastics material preforms (10) into the plastics material containers (20), the forming arrangement (6) having a heating means (12), which heats the plastics material preforms (10), as well as a blowing wheel (14), which is arranged in the direction of transport (P) of the plastics material preforms (10) and expands the heated plastics material preforms (10) so as to form the plastics material containers (20) by applying a flowable medium, wherein the blowing wheel (14) has a multiplicity of application means (58), which apply the free-flowing medium to the plastics material preforms (10), as well as a transport means (22), which transports the plastics material preforms, and the plant (1) has a discharge means (30), which is arranged between the first processing unit (2) and the forming arrangement, for discharging the plastics material preforms,
wherein the plant has a storage means (32) for at least temporarily storing the plastics material preforms (10) discharged by the discharge means (30), and the discharge means (30) is arranged after the feed region (4a) in the direction of transport of the plastics material preforms (10),
wherein the storage means is capable of storing a variable amount of plastics material preforms,
**characterised in that**
the storage means (32) is capable of storing at least 50 plastics material preforms (10), and by means of the first processing unit (2) at least temporarily more plastics material preforms can be output compared to the number of plastics material preforms (10) formed into plastics material containers (20) by the forming arrangement (6), wherein by this way the plant for producing plastics material preforms, which is the first processing unit (2), can be operated at least temporarily at a specific overproduction compared to the forming arrangement, so as to thus fill the store into which the plastics material preforms are discharged.

2. Plant (1) according to claim 1,
**characterised in that**
the discharge means (30) is arranged along the transport path of the plastics material preforms (10) so as to be closer to the heating means (12) than to the first processing unit (2).

3. Plant (1) according to claim 2,
**characterised in that**
the discharge means (2) is arranged directly before the heating means (12) in the transport direction of the plastics material preforms (10).

4. Plant (1) according to at least one of the preceding claims,
**characterised in that**
the first processing unit (2) is a production means for producing plastics material preforms (10).

5. Plant (1) according to at least one of the preceding claims,
**characterised in that**
the plant has a first temperature detection means (18) for detecting a temperature of the plastics material preforms (10).

6. Plant (1) according to at least one of the preceding claims,
**characterised in that**
the first processing unit (2) and the forming arrangement (6) are operated at production rates matched to one another.

7. Method for producing plastics material containers, said method comprising the following steps:
- provision of plastics material preforms (10) at a predefined temperature, which is preferably above an ambient temperature;
- transportation of the plastics material preforms (10) to a forming arrangement (6) by means of a transport means (4, 16);
- forming of the plastics material preforms (10) into plastics material containers (20) by means of the forming arrangement (6), wherein, to this end, the plastics material preforms (10) are first heated in a heating means (12) and the plastics material preforms (10) thus heated are then expanded to form the plastics material containers (20) by application of a flowable medium,
wherein the plastics material preforms (10) are at least temporarily discharged during normal operation after reaching the transport means (4, 16) and before reaching the forming arrangement (6), and are fed to a storage means (32) so as to be stored, wherein
by means of the first processing unit (2) at least temporarily more plastics material preforms (10) are output compared to the number of plastics material preforms (10) formed into plastics material containers (20) by the forming arrangement (6), wherein by this way the plant for producing plastics material preforms, which is the first processing unit (2), is operated at least temporarily at a specific overproduction compared to the forming arrangement, so as to thus fill the store into which the plastics material preforms are discharged.

8. Method according to claim 7,
**characterised in that**
the plastics material preforms (10) are stored and preferably are transported in the storage means (32) for predefined periods.

9. Method according to claim 8,
**characterised in that**
the periods during which the plastics material preforms (10) are located in the storage means (32) differ for the individual plastics material preforms (10).

## Revendications

1. Installation (1) pour la fabrication de récipients en matière plastique avec une première unité de traitement (2) qui sort des préformes en matière plastique (10) à une température supérieure à la température ambiante, avec un dispositif de transport (4, 16) qui évacue les préformes en matière plastique (10) de la première unité de traitement (2), le dispositif de transport (4, 16) comprenant une zone d'amenée (4a) où les préformes en matière plastique (10) sont amenées au dispositif de transport (4, 16), avec un dispositif de transformation (6) situé en aval de la première unité de traitement (2) dans la direction de transport des préformes en matière plastique (10), lequel transforme les préformes en matière plastique (10) en récipients en matière plastique (20), le dispositif de transformation (6) étant pourvu d'un dispositif de chauffage (12) qui chauffe les préformes en matière plastique (10), ainsi que d'une roue de soufflage (14) disposée dans la direction de transport (P) des préformes en matière plastique (10), laquelle expanse les préformes en matière plastique (10) chauffées par application d'un fluide à écoulement libre pour former les récipients en matière plastique (20), la roue de soufflage (14) présentant une pluralité de dispositifs d'application (58) qui appliquent le fluide à écoulement libre dans les préformes en matière plastique (10), ainsi qu'un dispositif de transport (22) qui transporte les préformes en matière plastique, et ladite installation (1) étant pourvue d'un dispositif d'évacuation (30) situé entre la première unité de traitement (2) et le dispositif de transformation pour l'évacuation des préformes en matière plastique,
ladite installation étant pourvue d'un dispositif de stockage (32) pour stocker au moins temporairement les préformes en matière plastique (10) évacuées par le dispositif d'évacuation (30), et le dispositif d'évacuation (30) étant situé en aval de la zone d'amenée (4a) dans la direction de transport des préformes en matière plastique (10),
le dispositif de stockage étant apte à recevoir un nombre variable de préformes en matière plastique,
**caractérisée en ce que**,
le dispositif de stockage (32) est adapté pour loger au moins 50 préformes en matière plastique, et plus de préformes en matière plastique (10) peuvent être évacuées au moins temporairement au moyen de la première unité de traitement (2) que le dispositif de mise en forme (6) ne transforme de préformes en matière plastique (10) en récipients en matière plastique (20), dans lequel le système de production des préformes en plastique, qui est la première unité de traitement, peut ainsi fonctionner au moins temporairement avec une certaine surproduction par rapport au dispositif de formage, afin de remplir ainsi le magasin dans lequel les préformes en matière plastique sont déchargées.

2. Installation (1) selon la revendication 1,
**caractérisée en ce que**
le dispositif d'évacuation (30) est plus proche du dispositif de chauffage (12) que de la première unité de traitement (2) le long du chemin de transport des préformes en matière plastique (10).

3. Installation (1) selon la revendication 2,
**caractérisée en ce que**
le dispositif d'évacuation (2) est situé directement devant le dispositif de chauffage (12) dans la direction de transport des préformes en matière plastique (10).

4. Installation (1) selon au moins une des revendications précédentes,
**caractérisée en ce que**
la première unité de traitement (2) est un dispositif de fabrication pour la production des préformes en matière plastique (10).

5. Installation (1) selon au moins une des revendications précédentes,
**caractérisée en ce que**
l'installation est pourvue d'un premier dispositif capteur de température (18) pour la détection d'une température des préformes en matière plastique (10).

6. Installation (1) selon au moins une des revendications précédentes,
**caractérisée en ce que**
la première unité de traitement (2) et le dispositif de transformation (6) sont mis en service avec des débits de production coordonnés entre eux.

7. Procédé de fabrication de récipients en matière plastique selon la revendication 1, comprenant les étapes suivantes:
- préparation de préformes en matière plastique (10) à une température définie préférentiellement supérieure à une température ambiante ;
- transport des préformes en matière plastique (10) vers un dispositif de transformation (6) au moyen d'un dispositif de transport (4, 16) ;
- transformation des préformes en matière plastique (10) en récipients en matière plastique (20) au moyen du dispositif de transformation (6), les préformes en matière plastique (10) étant à cet effet d'abord chauffées dans un dispositif de chauffage (12), les préformes en matière plastique (10) ainsi chauffées étant ensuite expansées par application d'un fluide à écoulement libre pour former les récipients en matière plastique (20),
les préformes en matière plastique (10) étant, pendant un mode de travail, au moins temporairement évacuées après avoir atteint le dispositif de transport (4, 16) et avant d'atteindre le dispositif de transformation (6), et amenées pour stockage à un dispositif de stockage (32), dans lequel
plus de préformes en matière plastique (10) peuvent être évacuées au moins temporairement au moyen de la première unité de traitement (2) que le dispositif de mise en forme (6) ne transforme de préformes en matière plastique (10) en récipients en matière plastique (20), dans lequel le système de production des préformes en plastique, qui est la première unité de traitement, peut ainsi fonctionner au moins temporairement avec une certaine surproduction par rapport au dispositif de formage, afin de remplir ainsi le magasin dans lequel les préformes en matière plastique sont déchargées.

8. Procédé selon la revendication 7,
**caractérisé en ce que**
les préformes en matière plastique (10) sont stockées pendant des périodes définies dans le dispositif de stockage (32) et sont préférentiellement transportées.

9. Procédé selon la revendication 8,
**caractérisé en ce que**
les périodes pendant lesquelles les préformes en matière plastique (10) se trouvent dans le dispositif de stockage (32) sont différenciées pour les différentes préformes en matière plastique (10).
